# DEMANDE DE BREVET EUROPEEN

(11) **EP 0 650 032 A1**
(43) Date de publication de la demande: **26.04.1995**
(21) Numéro de dépôt: 94402209.4
(22) Date de dépôt: 04.10.1994
(51) Int. Cl.: G01D 11/24

(54) **Module indicateur pour tableau de bord**

(30) Priorité: 21.10.1993 FR 9312561
(71) Demandeur: SOCIETE D'APPLICATIONS GENERALES D'ELECTRICITE ET DE MECANIQUE SAGEM Société anonyme française, F-75783 Paris Cédex 16 (FR)
(72) Inventeur: Metais, Derry, F-95650 Genicourt (FR)
(74) Mandataire: Bloch, Gérard

(57) **Abrégé**

Le module indicateur universel comporte exclusivement un plateau (11), portant un organe indicateur (2) et un support (10) d'informations associées à l'organe indicateur (2), tels qu'une aiguille et un cadran et un connecteur enfichable (17, 107) permettant un démontage par l'avant du tableau de bord et reliant l'organe indicateur (2) à des moyens (160) de gestion qui le commandent et en définissent la sensibilité.

Application aux véhicules automobiles

## Description

Un tableau de bord, ou combiné, de véhicule, et notamment de véhicule automobile terrestre, est équipé de divers modules indicateurs fournissant des informations, par exemple sur la vitesse, le régime du moteur, la pression d'huile, la température d'eau et les états de certains des organes du véhicule. Le nombre de ces indicateurs ne fait que croître pour répondre aux besoins du marché.

Un module indicateur peut comporter un afficheur, par exemple sous forme d'un cadran portant des repères et associé à une aiguille entraînée devant le cadran par un moteur d'entraînement relié à un capteur fournissant l'état à afficher. Entre le capteur et le moteur d'entraînement du module, un circuit de gestion transforme le signal du capteur en un signal de commande du moteur.

L'afficheur peut aussi être numérique, à cristaux liquides par exemple, avec un circuit de gestion comportant un convertisseur analogique-numérique.

Diverses sources de lumière, associées à des boîtes à lumière, peuvent être prévues pour, selon le cas, éclairer l'aiguille, le cadran ou les afficheurs numériques.

L'intégration d'un nombre relativement élevé de modules indicateurs dans le combiné présente un certain nombre de difficultés.

En effet, leurs formes, leurs interfaces de liaison aux capteurs associés et leurs organes de fixation sont spécifiques, conduisent à un montage long et coûteux des tableaux de bord et entravent la production de grandes séries.

En outre, la maintenance de tous ces modules indicateurs implique leur démontage hors du tableau de bord.

La présente invention vise à simplifier l'étude, la fabrication et le montage des modules indicateurs de tableau de bord.

A cet effet, l'invention concerne un module indicateur pour tableau de bord comportant exclusivement un plateau, agencé pour recevoir un organe indicateur et un support d'informations associées à l'organe indicateur, et des moyens de connexion pour connecter l'organe indicateur à des moyens de gestion de l'organe indicateur.

En d'autres termes, et schématiquement, il est revendiqué une carcasse de module universelle.

Comme il n'est prévu aucun circuit de gestion dans le module, celui-ci est fonctionnellement banalisé par rapport aux informations à présenter. Cette banalisation est spatiale, c'est-à-dire que le module peut être utilisé en plusieurs exemplaires, dans un même combiné, pour présenter des informations de types différents, sans aucun problème d'adaptation.

En outre, comme il s'agit d'un module, son montage et son démontage s'effectuent en bloc et ne font donc intervenir qu'un nombre limité de moyens.

Dans une forme de réalisation, le plateau est évidé pour former une boîte à lumière pour l'éclairage des informations du support.

De préférence, les moyens de connexion comportent un connecteur enfichable.

Le montage et le démontage du module dans le combiné sont ainsi très simples et permettent une maintenance par échange standard. En outre, monté entre un réhaut et un circuit imprimé, il peut de façon très avantageuse être démonté par l'avant du combiné.

De préférence encore, les moyens de connexion comportent des moyens de mise en forme de signaux de gestion.

On peut ainsi transmettre au module les informations sous une forme adaptée à leur transmission et ensuite, dans le module, amplifier ou présenter différemment les signaux, qu'ils soient analogiques ou numériques, et même les transcoder dans ce dernier cas.

Afin de raccorder plusieurs modules à un bus relié à un microprocesseur commun de gestion des modules, en vue de réduire le coût du combiné, il est avantageux que les moyens de connexion comportent des moyens de reconnaissance d'adresse, pour le fonctionnement du module.

L'invention sera mieux comprise à l'aide de la description suivante de la forme de réalisation préférée du module indicateur de l'invention, en référence au dessin annexé, sur lequel :
- la figure 1 est une vue en perspective d'une première forme de réalisation du module indicateur de l'invention,
- la figure 2 est une vue en coupe du module selon la ligne II-II de la figure 1 et dans un plan perpendiculaire à sa face avant, d'affichage, et
- la figure 3 est une représentation schématique par blocs fonctionnels d'une seconde forme de réalisation du module.

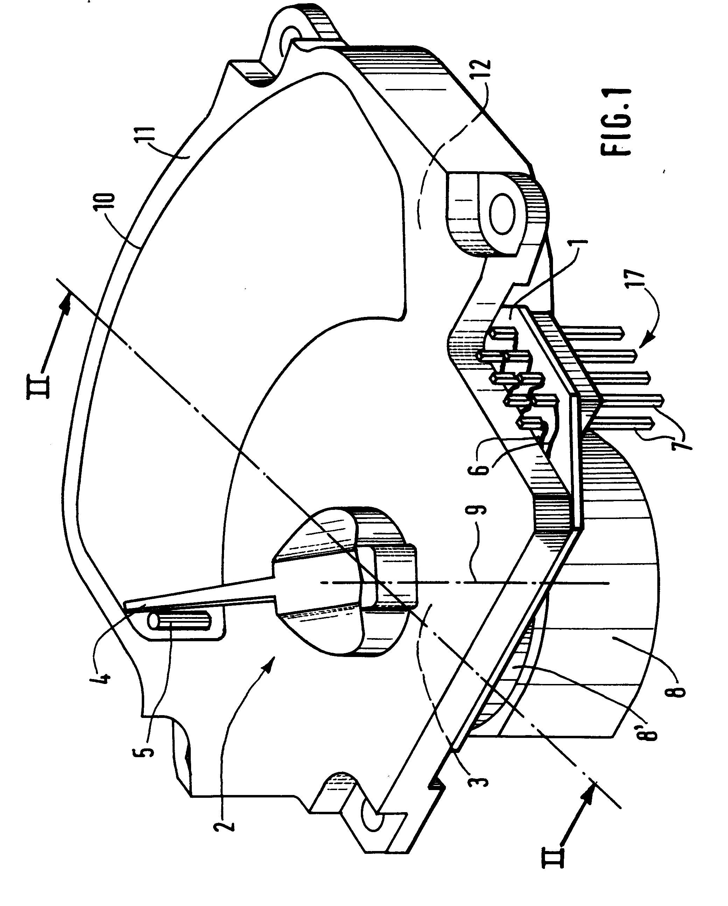

Le module de l'invention est ici monté dans le combiné d'un véhicule automobile. En référence à la figure 1, le module comporte un plateau 11, constituant une carcasse ou bâti, qui reçoit ici à l'avant, comme organe indicateur, une aiguille 2 montée sur l'arbre de sortie 9 d'un organe moteur électrique 8, et un cadran 10, associé à une butée 5. Une portion de circuit imprimé 1 porte des pistes 6 terminées par des broches 7 pour connecter le moteur 8, et donc l'indicateur, à un circuit externe de gestion. Les broches 7, soudées par une extrémité au circuit imprimé 1, font ici saillie vers l'arrière du module et forment un connecteur 17.

Le moteur 8 est ici fixé au circuit imprimé 1 par l'intermédiaire d'une colonnette 8'. L'arbre 9 du moteur 8 traverse perpendiculairement le circuit imprimé 1, vers l'avant du module, pour porter le pied 3 de l'aiguille 2, dont l'index 4 peut ainsi se déplacer en rotation parallèlement au cadran 10.

Dans cet exemple, il est prévu une boîte à lumière 12 d'éclairage par l'arrière du cadran 10, ici un film sérigraphié fixé sur le plateau 11.

La boîte à lumière 12 est formée par un évidement dans le plateau 11 et s'étend angulairement sur une longueur fonction de la sensibilité désirée.

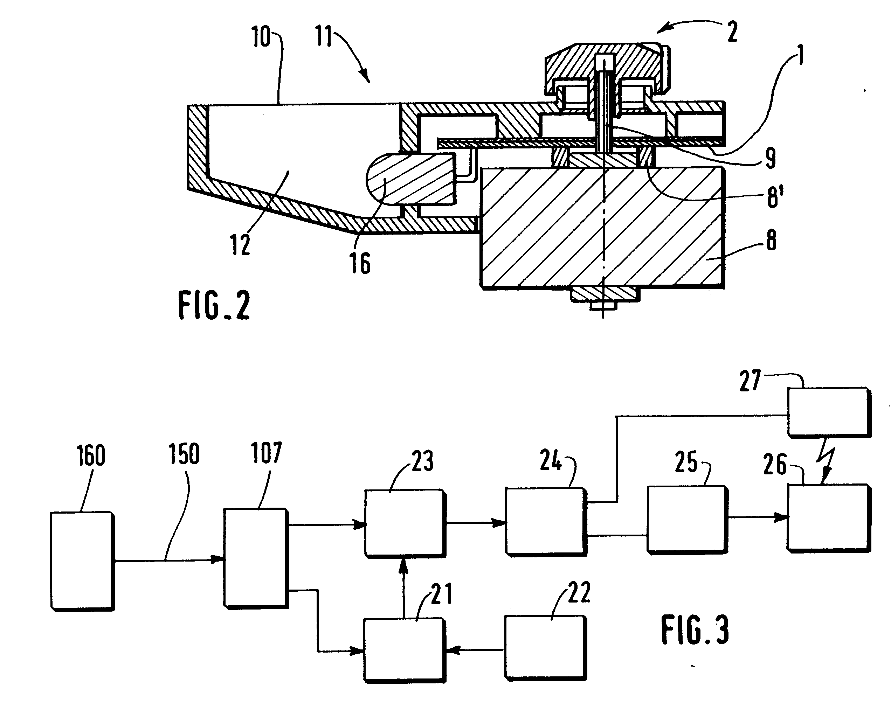

Plusieurs sources d'éclairage, dont l'une, 16, est représentée sur la figure 2, sont ici montées sur le circuit imprimé 1 et sont reliées aux broches 7 leurs têtes pénètrent dans la boîte à lumière 12.

Dans la seconde forme de réalisation de la figure 3, certains des éléments décrits ci-dessus ont la même fonction.

Un connecteur enfichable 107 relie une partie "adresse" d'un bus externe 150 à une entrée d'un comparateur 21 relié par sa seconde entrée à la sortie d'une mémoire 22 contenant une adresse spécifique au module.

Le connecteur 107 relie une partie "données" de bus 150 aux entrées d'un ensemble de portes 23, reliées en sortie à un transcodeur 24 avec mémoire alimentant un décodeur 25 commandant un afficheur 26, ici à cristaux liquides, ces portes 23 étant commandées par le comparateur 21. Une source 27 d'éclairage de l'afficheur 26 est aussi commandée par le transcodeur 24. Un microprocesseur externe 160 est relié au bus 150 pour gérer le module.

On remarquera que, au lieu du connecteur 17, 107, il aurait pu être prévu des lames de contact disposées pour, par glissement lors de l'introduction par l'avant du module dans son logement du combiné, venir contre des lames de contact correspondantes reliées au capteur ou au bus 150. Pour éviter la nécessité d'une fixation complémentaire du module dans son logement, il suffit de prévoir des lames élastiques et, éventuellement, sur la paroi latérale du logement, une piste de glissement, pour au moins une des lames élastiques.

Le fonctionnement du module va maintenant être décrit.

L'enfichage, par l'avant, du connecteur 17, 107 dans un connecteur femelle correspondant permet le raccordement du module à un circuit de gestion qui va pouvoir transmettre au moteur 8 des commandes d'affichage, sous forme ici d'impulsions de durée voulue aux instants appropriés, pour entraîner en rotation l'aiguille 2 devant le cadran 10, selon un angle de déviation fonction d'un signal à afficher, reçu par le circuit de gestion. C'est donc celui-ci qui définit la sensibilité de la déviation angulaire de l'aiguille 2. Il aurait pu être prévu, entre le connecteur 17,107 et le moteur 8, des circuits de mise en forme des commandes d'affichage pour en adapter la forme, ou simplement des amplificateurs pour permettre de transmettre plus facilement les commandes d'affichage, avec une énergie limitée.

Les sources d'éclairage 16 sont alimentées par l'une des broches 7 et sont commandées depuis une ou plusieurs autres des broches 7, individuellement ou globalement, par tout ou rien ou bien progressivement, pour éclairer le cadran 10.

Le circuit 1 aurait tout aussi bien pu être imprimé sur le plateau 11. Les informations ou caractères du cadran associés à l'organe indicateur pourraient aussi être imprimées, par exemple sérigraphiés, sur le plateau 11.

On notera qu'il aurait pu être prévu un cadran solidaire de l'arbre 9 du moteur 8 tournant devant un index fixe, ou encore un déplacement relatif autre que rotatif.

Un éclairage de l'aiguille 2 à partir de l'arrière est envisageable, en raccordant son pied 3 à une source de lumière.

Dans la seconde forme de réalisation, les signaux sont entièrement numériques. Pour commander un nouvel affichage, le microprocesseur 160 émet sur le bus 150 un message comportant une adresse destinataire et des données de commande d'affichage, ici au moyen de trames temporelles.

Dans le combiné, plusieurs modules physiquement identiques sont reliés au bus 150, chacun avec une adresse (22) spécifique. Dans chaque module, l'adresse du message est comparée à l'adresse locale (22) et seul le comparateur 21 du module adressé par le microprocesseur 160 ouvre les portes 23. Le transcodeur 24 mémorise et transcode les données de commande, présentées dans un code adapté à leur transmission sur le bus 150, en un code interprétable par le décodeur 25, qui excite alors les segments voulus de l'afficheur 26. On remarquera que le module indicateur peut être utilisé en partage de temps et disposer de plusieurs adresses pour afficher des informations de types différents. On comprendra que l'adresse du module peut être tout mot de code, par exemple un mot de code désignant le type d'informations affichées. Le transcodeur 24 commande ici l'allumage de la source 27, tant que l'afficheur 26 est actif.

On notera que la liaison 150 entre le microprocesseur 160 et le module aurait pu être prévue bidirectionnelle, par exemple pour que le microprocesseur 160 teste le bon fonctionnement du module par envoi d'ordres et réception de signalisations indiquant leur exécution.

## Revendications

1. Module indicateur pour tableau de bord comportant exclusivement un plateau (11), agencé pour recevoir un organe indicateur (2) et un support (10) d'informations associées à l'organe indicateur (2), et des moyens de connexion (17, 107) pour connecter l'organe indicateur (2) à des moyens (160) de gestion de l'organe indicateur (2).

2. Module indicateur selon la revendication 1, dans lequel le plateau (11) est évidé pour former une boîte à lumière (12) pour l'éclairage des informations du support (10).

3. Module selon l'une des revendications 1 et 2, dans lequel les moyens de connexion comportent un connecteur enfichable (17, 107).

4. Module selon la revendication 3, dans lequel le connecteur (17, 107) est disposé à l'arrière du module.

5. Module selon l'une des revendications 1 à 4, dans lequel les moyens de connexion comportent des moyens (24) de mise en forme de signaux de gestion.

6. Module selon l'une des revendications 1 à 5, dans lequel les moyens de connexion comportent des moyens (21, 22) de reconnaissance d'adresse, pour le fonctionnement du module.

7. Module selon l'une des revendications 1 à 6, dans lequel un circuit imprimé conducteur (1, 6) est monté sur le plateau (11).

8. Module selon l'une des revendications 1 à 7, dans lequel les informations associées à l'organe indicateur (2) sont imprimées sur le plateau (11).
